# FASCICULE DE BREVET EUROPEEN

(11) **EP 3 247 885 B1**
(45) Date de publication et mention de la délivrance du brevet: **12.09.2018**
(21) Numéro de dépôt: 16701839.9
(22) Date de dépôt: 13.01.2016
(51) Int. Cl.: F01D 17/16

(54) **SYSTÈME DE COMMANDE D'AUBES À CALAGE VARIABLE POUR UNE TURBOMACHINE**
SYSTEM ZUR STEUERUNG VON SCHAUFELN MIT VARIABLEM NEIGUNGSWINKEL FÜR EINEN TURBINENMOTOR
SYSTEM FOR CONTROLLING VARIABLE PITCH BLADES FOR A TURBINE ENGINE

(30) Priorité: 19.01.2015 FR 1550395
(43) Date de publication de la demande: 29.11.2017
(73) Titulaire: Safran Aircraft Engines, 75015 Paris (FR)
(72) Inventeur: DUMAS, Lilian, Yann, 77550 Moissy-Cramayel (FR); BENDERRADJI, Kamel, 77550 Moissy-Cramayel (FR); BROMANN, Alain, Marc, Lucien, 77550 Moissy-Cramayel (FR); COUSTILLAS, Suzanne, Madeleine, 77550 Moissy-Cramayel (FR)
(74) Mandataire: Gevers & Orès
(86) Numéro de dépôt international: PCT/FR2016/050049
(87) Numéro de publication internationale: WO 2016/116682

(56) Documents cités:
- WO-A2-2008/147023
- US-A- 3 066 488

## Description

### DOMAINE TECHNIQUE

La présente invention concerne un système de commande d'aubes à calage variable pour une turbomachine.

### ETAT DE L'ART

L'état de l'art comprend notamment les documents WO-A2-2008/147023 et US-A-3,066,488.

Les aubes de stator à calage variable (aussi appelées VSV - acronyme de *Variable Stator Vanes*) d'une turbomachine sont portées par un carter annulaire externe, en général d'un compresseur de la turbomachine. Chaque aube comprend une pale qui est reliée à son extrémité radialement externe par une platine à contour sensiblement circulaire à un pivot cylindrique radial qui définit l'axe de rotation de l'aube et qui est guidé en rotation dans un orifice correspondant du carter externe. L'extrémité radialement interne de la pale de chaque aube comprend en général un second pivot cylindrique s'étendant le long de l'axe de rotation de l'aube et guidé en rotation dans un orifice d'un carter interne du compresseur.

L'extrémité radialement externe du pivot externe de chaque aube est reliée par un levier à un anneau de commande déplacé en rotation autour du carter externe par des moyens d'actionnement à vérin ou analogue. La rotation de l'anneau de commande est transmise par les biellettes aux pivots externes des aubes et les fait tourner autour de leurs axes.

Le calage angulaire des aubes de stator dans une turbomachine est destiné à adapter la géométrie du compresseur à son point de fonctionnement et notamment à optimiser le rendement et la marge au pompage de cette turbomachine et à réduire sa consommation de carburant dans les différentes configurations de vol.

Chacune de ces aubes est déplaçable en rotation autour de son axe entre une première position « d'ouverture » ou « de pleine ouverture » dans laquelle chaque aube s'étend sensiblement parallèlement à l'axe longitudinal de la turbomachine, et une seconde position « de fermeture » ou « de quasi-fermeture » dans laquelle les aubes sont inclinées par rapport à l'axe de la turbomachine et réduisent ainsi la section de passage de l'air à travers l'étage d'aubes.

L'anneau de commande doit être centré et guidé en rotation autour de son axe de rotation. Dans la technique actuelle, le carter externe comprend des pistes sur lesquelles la périphérie interne de l'anneau peut venir coopérer par frottement. Le carter comprend des organes, tels que des patins, d'appui et de guidage sur les pistes. Les patins servent, d'une part, à assurer la concentricité de l'anneau autour du carter par ajustement de jeux patins/carter et, d'autre part, à limiter la déformation de l'anneau engendrée par les efforts aérodynamiques sur les aubes à calage variable s'exerçant sur la cinématique lors du fonctionnement.

La présente invention propose un perfectionnement à cette technologie antérieure, qui est simple, efficace et économique.

### EXPOSE DE L'INVENTION

L'invention propose un système de commande d'aubes à calage variable pour une turbomachine, comportant au moins une rangée annulaire d'aubes à calage variable s'étendant autour d'un axe et comportant chacune une pale reliée à son extrémité radialement externe à un pivot qui définit un axe sensiblement radial de rotation de l'aube et qui est relié par un levier à des moyens de commande s'étendant autour dudit axe, caractérisé en ce que lesdits moyens de commande comprennent des premiers maillons portés par lesdits pivots et des seconds maillons s'étendant entre lesdits premiers maillons, lesdits premiers et seconds maillons s'étendant sensiblement sur une même circonférence autour dudit axe et étant reliés les uns aux autres et à des moyens d'actionnement.

L'anneau de commande de la technique antérieure est ainsi remplacé par des moyens assimilables à une chaîne et comportant une succession de maillons. Des premiers maillons sont portés par les leviers reliés aux pivots des aubes et des seconds maillons s'étendent entre les premiers maillons et sont reliés à eux. L'ensemble est relié à des moyens d'actionnement, tels qu'un vérin. La rotation des moyens de commande est initiée par les moyens d'actionnement et le mouvement est transmis d'un premier maillon à un autre premier maillon adjacent par le second maillon s'étendant entre ces premiers maillons. Les seconds maillons peuvent ainsi servir à synchroniser les mouvements des premiers maillons et donc les rotations des aubes autour des axes de leurs pivots. Cette technologie permet de supprimer les patins de guidage de la technique antérieure et donc de simplifier le système et d'en réduire la masse, le coût et les réglages lors du montage.

En effet, par rapport à un système à anneau, l'invention permet d'économiser sur le réglage en s'affranchissant des dilatations différentielles entre d'une part les aubes et leur carter externe et d'autre part l'anneau. En fonctionnement, les maillons et les leviers ont leur comportement en dilatation qui est très proche de celui des aubes et du carter externe associé, au bénéfice de la réduction des efforts dans le système de commande.

Le système selon l'invention peut comprendre une ou plusieurs des caractéristiques suivantes, prises isolément les unes des autres ou en comparaison les unes avec les autres :
- le nombre des premiers maillons est égal au nombre des seconds maillons, qui est égal au nombre de leviers (ou d'aubes) ;
- lesdits premiers maillons sont formés d'une seule pièce avec lesdits leviers ;
- chacun des premiers et/ou seconds maillons a une forme allongée et est reliée par ses extrémités longitudinales à d'autres maillons ;
- les premiers maillons sont reliés par des liaisons pivots et/ou rotulantes aux second maillons ;
- les seconds maillons ont chacun une forme générale incurvée, de préférence dans un plan sensiblement tangent à une circonférence centrée sur ledit axe ;
- les premiers maillons sont des maillons femelles et les seconds maillons sont des maillons mâles ;
- chaque levier a une forme générale allongée et comprend une première extrémité longitudinale de liaison au pivot d'une aube et une seconde extrémité longitudinale portant un desdits premiers maillons ;
- au moins un des leviers comprend un prolongement longitudinal de liaison auxdits moyens d'actionnement ;
- ledit prolongement longitudinal comprend une lunule ou lumière traversante de guidage en coulissement d'un élément desdits moyens d'actionnement ; et
- lesdits moyens d'actionnement sont reliés à deux rangées annulaires d'aubes à calage variable.

La présente invention concerne également une turbomachine, caractérisée en ce qu'elle comprend au moins un système tel que décrit ci-dessus.

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est une demi-vue schématique partielle en coupe axiale d'étages d'aubes à calage variable de turbomachine ;
- la figure 2 est une vue schématique partielle en perspective d'un système de commande d'aubes à calage variable de turbomachine selon l'invention ;
- la figure 3 est une vue schématique à plus grande échelle d'une liaison entre deux maillons des moyens de commande du système selon l'invention ; et
- la figure 4 est une vue très schématique d'une variante de réalisation du système de commande d'aubes à calage variable selon l'invention.

### DESCRIPTION DETAILLEE

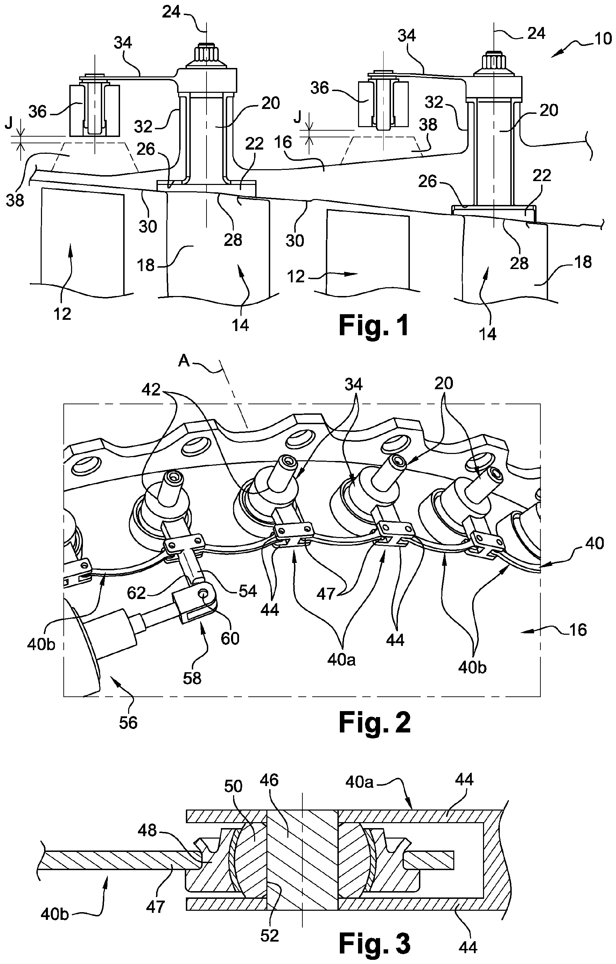

En figure 1, on a représenté schématiquement, en coupe axiale, une partie d'un compresseur haute-pression 10 d'une turbomachine, en particulier d'une turbomachine d'aéronef, à plusieurs étages, chaque étage comprenant une rangée annulaire d'aubes mobiles 12 portées par le rotor (non représenté) de la turbomachine et une rangée annulaire d'aubes fixes 14 formant redresseurs portées par un carter 16 du stator de la turbomachine, l'orientation angulaire des aubes 14 étant réglable pour optimiser l'écoulement gazeux dans le compresseur 10.

Chaque aube 14 comprend une pale 18 et un pivot cylindrique 20 radialement externe, relié par un disque ou « platine » 22 s'étendant perpendiculairement à l'axe 24 de l'aube dans un logement 26 correspondant du carter 16. La surface radialement interne 28 du disque est alignée avec la paroi interne 30 du carter pour ne pas s'opposer à l'écoulement gazeux.

Dans la technique antérieure, le pivot cylindrique 20 de chaque aube 14 s'étend à l'intérieur d'une cheminée cylindrique radiale 32 du carter 16 et son extrémité radialement externe est reliée par un levier 34 à un anneau de commande 36 qui entoure le carter 16 et qui est associé à des moyens d'actionnement (non représentés) permettant de le faire tourner dans un sens ou dans l'autre autour de l'axe longitudinal du carter 16 pour entraîner les aubes 14 d'une rangée annulaire en rotation autour de leurs axes 24.

Les aubes 14 sont déplaçables en rotation autour de leurs axes 24 entre une position de pleine fermeture et une position de pleine ouverture.

Dans la position de pleine fermeture, les pales 18 des aubes sont inclinées par rapport à l'axe longitudinal de la turbomachine et définissent entre elles une section minimale de passage d'air dans la veine. Les aubes 14 sont amenées dans cette position lorsque la turbomachine est à bas régime ou au ralenti, le débit d'air s'écoulant dans le compresseur ayant alors une valeur minimale.

Dans la position de pleine ouverture, les pales 18 des aubes s'étendent sensiblement parallèlement à l'axe de la turbomachine de façon à ce que la section de passage d'air entre les pales soit maximale. Les aubes 14 sont amenées dans cette position lorsque la turbomachine est au régime plein gaz, le débit d'air s'écoulant dans le compresseur ayant alors une valeur maximale.

Dans la technique antérieure, le carter 16 comprend à sa périphérie externe des pistes 38 en saillie de centrage et de guidage des anneaux 36, qui sont ici schématiquement représentées par des traits pointillés. Chaque anneau 36 entoure sa ou ses pistes de guidage 38. La référence J désigne les jeux radiaux qui sont prévus à froid entre un anneau 36 et sa ou ses pistes 38. Ces jeux J doivent être suffisamment importants pour permettre des dilatations thermiques du carter 16 mais ne permettent pas de régler avec précision les positions angulaires des aubes 14. Ces jeux J sont réglés au moyen de cales lors du montage du système de commande.

L'invention permet notamment de simplifier cette technologie en remplaçant l'anneau de commande par une succession de maillons.

La figure 2 représente un mode de réalisation de l'invention.

Les moyens de commande 40 comprennent une succession de maillons 40a, 40b qui s'étendent sur une même circonférence autour de l'axe longitudinal A du carter 16 et qui sont disposés sensiblement bout à bout et reliés les uns aux autres. Les moyens de commande 40 comprennent des premiers maillons 40a portés par les leviers 34 et des seconds maillons 40b s'étendant entre les premiers maillons 40a.

Chaque levier 34 a une forme allongée et comprend une première extrémité longitudinale reliée au pivot 20 d'une aube et une seconde extrémité longitudinale reliée à un premier maillon 40a. La première extrémité de chaque levier 34 comprend ici un orifice 42 traversé par le pivot 20 de l'aube. Le levier 34 est configuré pour être solidarisé en rotation vis-à-vis de l'aube et peut comprendre, au niveau de son orifice 42 un méplat ou un moyen analogue destiné à coopérer avec le pivot 20 pour atteindre ce résultat. Comme cela est visible en figure 1, un écrou pourrait être vissé sur une portion filetée du pivot 20 de l'aube pour assurer la retenu du levier 34 vis-à-vis de ce pivot.

Dans l'exemple représenté, la seconde extrémité de chaque levier 34 est formée d'une seule pièce avec un premier maillon 40a.

Chaque premier maillon 40a a une forme allongée dont l'axe d'allongement est sensiblement perpendiculaire à celui du levier 34 correspondant. Chaque premier maillon 40a est ici du type femelle et comprend à chacune de ses extrémités longitudinales des moyens de liaison, et en particulier d'articulation, aux seconds maillons 40b adjacents. Chacune des extrémités longitudinales du premier maillon 40a forme une chape du type femelle, comportant deux oreilles 44 parallèles et espacées l'une de l'autre, ces oreilles 44 comportant des orifices de montage d'un axe 46 sensiblement radial d'articulation d'un second maillon 40b.

Chaque second maillon 40b a une forme allongée et ici légèrement incurvée. Chaque second maillon 40b est incurvé dans un plan sensiblement tangent à une circonférence centrée sur l'axe A. Comme on le voit en figure 2, les concavités des seconds maillons 40b sont toutes orientées dans la même direction longitudinale.

Chaque second maillon 40b est ici du type mâle et comprend à chacune de ses extrémités longitudinales des moyens de liaison, et en particulier d'articulation, aux premiers maillons 40a adjacents. Chacune des extrémités longitudinales du second maillon 40b forme une chape du type mâle, comportant une oreille 47 comportant un orifice traversé par l'axe 46 précité.

De préférence et comme cela est représenté en figure 3, les premiers et seconds maillons 40a, 40b sont reliés entre eux par des liaisons rotulantes. Chaque liaison rotulante comprend une bague externe 48 qui est engagée et sertie dans l'orifice de l'oreille 47 du second maillon 40b et qui comprend un logement interne sphérique à l'intérieur duquel est montée rotulante une noix 50 en portion de sphère. La noix 50 comprend un logement cylindrique 52 traversé par un doigt formant l'axe 46 et dont les extrémités longitudinales sont fixées respectivement aux oreilles 44 du premier maillon 40a. Le doigt formant l'axe 46 est de préférence monté dans le logement 52 pour former un pivot glissant.

Au moins un des leviers 34 a une dimension longitudinale supérieure à celle des autres leviers et comprend, du côté de sa seconde extrémité longitudinale précitée, un prolongement longitudinal 54 de liaison à des moyens d'actionnement, et plus particulièrement à la tige de piston 58 d'un vérin 56 dans l'exemple représenté. Ce prolongement longitudinal 54 est relié par son extrémité libre à la tige de vérin 58.

Le corps de vérin 56 possède ici une tige vérin 58 femelle comportant deux oreilles parallèles et espacées l'une de l'autre, ces oreilles 44 comportant des orifices de montage d'un axe 60. L'extrémité libre du prolongement 54 du levier forme une chape 62 mâle comportant une oreille comportant un orifice traversé par l'axe 60. Une liaison rotulante, du type de celle représentée en figure 3, peut être utilisée pour relier la chape 62 à la tige 58.

Au montage des leviers 34 et des maillons, les réglages sont simplifiés du fait de l'absence de patin. Les aubes et leurs leviers sont positionnés angulairement et les maillons sont raccordés en vérifiant les positionnements angulaires dans les étages d'aubes, en vérifiant pour diverses positions angulaires que les côtes des maillons concordent avec les résultats souhaités. De telles vérifications sont connues dans leur principe, mais ici, du fait des maillons, il n'y a pas de patin à sélectionner et des opérations de réglages sont donc évitées.

En fonctionnement, le vérin 56 actionne sa tige 58 de piston, ce qui engendre un déplacement du levier 34 et une rotation de l'aube 14 correspondante autour de l'axe 24 de son pivot 20. Ce mouvement de rotation est transmis aux leviers 34 adjacents et aux autres leviers 34 par l'intermédiaire des maillons 40a, 40b qui synchronisent ainsi les déplacements des leviers et des aubes 14. En fonctionnement, les dilatations des aubes et du carter externe associé induisent peu d'effort dans les leviers et maillons dont le comportement en dilatation concorde bien à celui desdits carters et aubes par une bonne transmission des dilatations, tout en conservant la précision souhaitée. Les effets d'inertie en dilatation de certains systèmes de commande à anneau de l'état de la technique sont évités, au bénéfice de la minimisation des transmissions d'efforts dans le système de commande et au bénéfice de la conservation de la précision de manière homogène même lors de phases transitoires de dilatation.

Le système de commande selon l'invention peut comprendre entre deux et quatre moyens d'actionnement (vérins) distincts. Le système comprend alors entre deux et quatre leviers équipés chacun d'un prolongement 54.

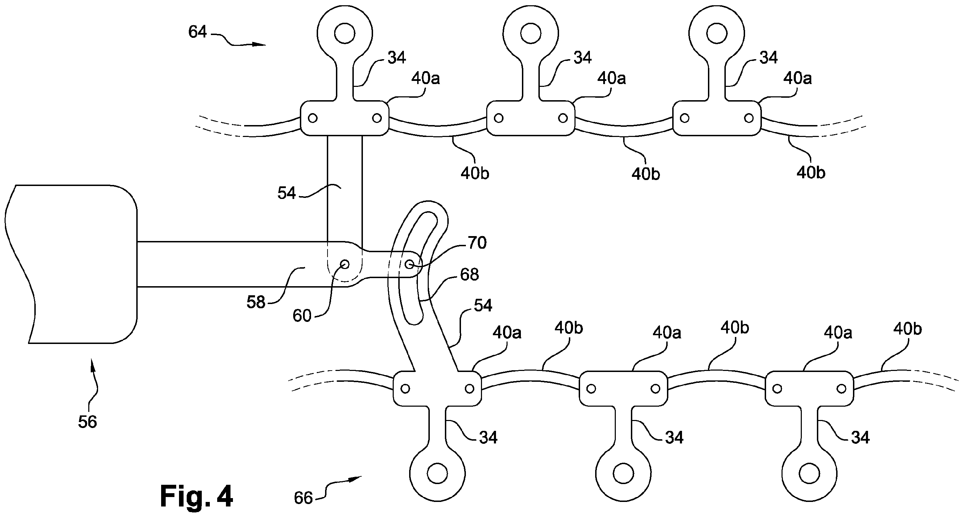

Dans la variante représentée schématiquement en figure 4, le ou les moyens d'actionnement sont reliés à deux étages ou rangées annulaires d'aubes à calage variable, respectivement amont 64 et aval 66.

La rangée annulaire amont 64 d'aubes à calage variable est sensiblement identique à celle décrite dans ce qui précède, en référence aux figures 2 et 3.

La rangée annulaire aval 66 d'aubes à calage variable est similaire à la rangée annulaire amont 64. La description ci-dessus relative aux figures 2 et 3 s'applique donc à cette rangée 66 dans la mesure où elle ne contredit pas ce qui suit.

Les leviers 34 de la rangée aval 66 s'étendent vers la rangée amont 64. Par ailleurs, les concavités des seconds maillons 40b sont toutes orientées dans la même direction longitudinale, opposées à celle des seconds maillons de la rangée amont 64.

Au moins un des leviers 34 de la rangée aval 66 a une dimension longitudinale supérieure à celle des autres leviers et comprend, du côté de son extrémité longitudinale opposée à l'aube, un prolongement longitudinal 54 de liaison aux moyens d'actionnement, et plus particulièrement à la tige de piston 58 du vérin 56 dans l'exemple précité. Ce prolongement longitudinal 54 comprend une lumière ou lunule 68 traversante dans lequel est monté coulissant un axe 70 porté par la tige de vérin 58.

Le corps du vérin 56 possède ici une tige vérin 58 femelle comportant deux oreilles parallèles et espacées l'une de l'autre, ces oreilles comportant des orifices de montage d'un premier axe 60 de liaison au prolongement 54 du levier 34 de la rangée amont 64 et d'un second axe 70 de liaison au prolongement du levier 34 de la rangée aval 66.

En fonctionnement, le ou chaque vérin 56 actionne sa tige de piston 58 ce qui engendre un déplacement des leviers 34 des deux rangées 64, 66 et une rotation des aubes reliées à ces leviers autour des axes de leurs pivots. La lunule 68 permet de transmettre un calage angulaire souhaité aux aubes de la rangée 66, qui est différent de celui des aubes de la rangée 64. Les mouvements de rotation sont transmis aux leviers 34 adjacents et aux autres leviers 34 des deux rangées 64, 66 par l'intermédiaire des maillons 40a, 40b qui synchronisent ainsi les déplacements des leviers et des aubes 14.

## Revendications

1. Système de commande d'aubes (14) à calage variable pour une turbomachine, comportant au moins une rangée annulaire (64, 66) d'aubes à calage variable s'étendant autour d'un axe (A) et comportant chacune une pale (14) reliée à son extrémité radialement externe à un pivot (20) qui définit un axe (24) sensiblement radial de rotation de l'aube et qui est relié par un levier (34) à des moyens de commande (40a, 40b) s'étendant autour dudit axe, lesdits moyens de commande comprennent des premiers maillons (40a) portés par lesdits pivots et des seconds maillons (40b) s'étendant entre lesdits premiers maillons, **caractérisé en ce que** lesdits premiers et seconds maillons s'étendant sensiblement sur une même circonférence autour dudit axe et étant reliés les uns aux autres et à des moyens d'actionnement (56).

2. Système selon la revendication 1, dans lequel le nombre des premiers maillons (40a) est égal au nombre des seconds maillons (40b), qui est égal au nombre de leviers (34).

3. Système selon la revendication 1 ou 2, dans lequel lesdits premiers maillons (40a) sont formés d'une seule pièce avec lesdits leviers (20).

4. Système selon l'une des revendications précédentes, dans lequel chacun des premiers et/ou seconds maillons (40a, 40b) a une forme allongée et est reliée par ses extrémités longitudinales à d'autres maillons.

5. Système selon l'une des revendications précédentes, dans lequel les premiers maillons (40a) sont reliés par des liaisons pivots et/ou rotulantes aux second maillons (40b).

6. Système selon l'une des revendications précédentes, dans lequel les seconds maillons (40b) ont chacun une forme générale incurvée, de préférence dans un plan sensiblement tangent à une circonférence centrée sur ledit axe (A).

7. Système selon l'une des revendications précédentes, dans lequel les premiers maillons (40a) sont des maillons femelles et les seconds maillons (40b) sont des maillons mâles.

8. Système selon l'une des revendications précédentes, dans lequel chaque levier (20) a une forme générale allongée et comprend une première extrémité longitudinale de liaison au pivot (20) d'une aube (14) et une seconde extrémité longitudinale portant un desdits premiers maillons (40a).

9. Système selon la revendication 8, dans lequel au moins un des leviers (34) comprend un prolongement longitudinal (54) de liaison auxdits moyens d'actionnement (56).

10. Système selon l'une des revendications précédentes, dans lequel lesdits moyens d'actionnement (56) sont reliés à deux rangées annulaires (64, 66) d'aubes à calage variable.

## Patentansprüche

1. System zum Steuern von Schaufeln (14) mit variablem Neigungswinkel für einen Turbinenmotor, mindestens eine ringförmige Reihe (64, 66) von Schaufeln mit variablem Neigungswinkel aufweisend, die sich um eine Achse (A) herum erstrecken und jeweils ein Schaufelblatt (14) aufweisen, das an seinem radial externen Ende mit einem Drehzapfen (20) verbunden ist, der eine im Wesentlichen radiale Drehachse (24) der Schaufel definiert und der über einen Hebel (34) mit Steuermitteln (40a, 40b) verbunden ist, die sich um die Achse herum erstrecken, wobei die Steuermittel erste Kettenglieder (40a), die von den Drehzapfen getragen werden, und zweite Kettenglieder (40b), die sich zwischen den ersten Kettengliedern erstrecken, umfassen, **dadurch gekennzeichnet, dass** sich die ersten und zweiten Kettenglieder im Wesentlichen auf einem gleichen Umfang um die Achse herum erstrecken und miteinander und mit Betätigungsmitteln (56) verbunden sind.

2. System nach Anspruch 1, wobei die Anzahl der ersten Kettenglieder (40a) gleich der Anzahl der zweiten Kettenglieder (40b) ist, die gleich der Anzahl von Hebeln (34) ist.

3. System nach Anspruch 1 oder 2, wobei die ersten Kettenglieder (40a) in einem Stück mit den Hebeln (20) gebildet sind.

4. System nach einem der vorstehenden Ansprüche, wobei jedes der ersten und/oder zweiten Kettenglieder (40a, 40b) eine längliche Form aufweist und über seine Längsenden mit anderen Kettengliedern verbunden ist.

5. System nach einem der vorstehenden Ansprüche, wobei die ersten Kettenglieder (40a) durch Drehzapfen- und/oder Kugelverbindungen mit den zweiten Kettengliedern (40b) verbunden sind.

6. System nach einem der vorstehenden Ansprüche, wobei die zweiten Kettenglieder (40b) jeweils eine allgemeine gekrümmte Form, vorzugsweise in einer im Wesentlichen tangentialen Ebene zu einem auf die Achse (A) zentrierten Umfang aufweisen.

7. System nach einem der vorstehenden Ansprüche, wobei die ersten Kettenglieder (40a) Aufnahmekettenglieder sind und die zweiten Kettenglieder (40b) Einsteckkettenglieder sind.

8. System nach einem der vorstehenden Ansprüche, wobei jeder Hebel (20) eine allgemeine längliche Form aufweist und ein erstes Längsende zur Verbindung mit dem Drehzapfen (20) einer Schaufel (14) und ein zweites Längsende, das eines der ersten Kettenglieder (40a) trägt, umfasst.

9. System nach Anspruch 8, wobei mindestens einer der Hebel (34) eine Längsverlängerung (54) zur Verbindung mit den Betätigungsmitteln (56) umfasst.

10. System nach einem der vorstehenden Ansprüche, wobei die Betätigungsmittel (56) mit zwei ringförmigen Reihen (64, 66) von Schaufeln mit variablem Neigungswinkel verbunden sind.

## Claims

1. Control system for variable-pitch vanes (14) for a turbine engine, comprising at least one annular row (64, 66) of variable-pitch vanes extending around an axis (A) and each comprising a blade (14) which is connected at the radially outer end thereof to a pivot (20) which defines a substantially radial axis (24) of rotation of the vane and which is connected by a lever (34) to control means (40a, 40b) extending around said axis, said control means comprise first links (40a) carried by said pivots and second links (40b) extending between said first links, **characterised in that** said first and second links extending substantially over the same circumference around said axis and being connected to one another and to actuation means (56).

2. System according to claim 1, wherein the number of the first links (40a) is equal to the number of the second links (40b), which is equal to the number of levers (34).

3. System according to either claim 1 or claim 2, wherein said first links (40a) are formed in one piece with said levers (20).

4. System according to any of the preceding claims, wherein each of the first and/or second links (40a, 40b) has an elongate shape and is connected by the longitudinal ends thereof to other links.

5. System according to any of the preceding claims, wherein the first links (40a) are connected by pivot and/or swivel connections to the second links (40b).

6. System according to any of the preceding claims, wherein the second links (40b) each have a general curved shape, preferably in a plane which is substantially tangent to a circumference which is centred on said axis (A).

7. System according to any of the preceding claims, wherein the first links (40a) are female links, and the second links (40b) are male links.

8. System according to any of the preceding claims, wherein each lever (20) has a general elongate shape and comprises a first longitudinal end for connection to the pivot (20) of a vane (14) and a second longitudinal end carrying one of said first links (40a).

9. System according to claim 8, wherein at least one of the levers (34) comprises a longitudinal extension (54) for connection to said actuation means (56).

10. System according to any of the preceding claims, wherein said actuation means (56) are connected to two annular rows (64, 66) of variable-pitch vanes.
